# EUROPEAN PATENT SPECIFICATION

(11) **EP 3 088 459 B1**
(45) Date of publication and mention of the grant of the patent: **04.11.2020**
(21) Application number: 15165182.5
(22) Date of filing: 27.04.2015
(51) Int. Cl.: C08L 23/12, C08L 23/14

(54) **POLYPROPYLENE COMPOSITE**
POLYPROPYLENVERBUNDSTOFF
COMPOSITION DE POLYPROPYLÈNE

(43) Date of publication of application: 02.11.2016
(73) Proprietor: Borealis AG, 1220 Vienna (AT)
(72) Inventor: Braun, Hermann, 4040 Linz (AT); Jerabek, Michael, 4060 Leonding (AT); Lummerstorfer, Thomas, 4201 Gramastetten (AT); Sobczak, Lukas, 4030 Linz (AT); Haider, Andreas, 4020 Linz (AT)
(74) Representative: Lux, Berthold

(56) References cited:
- WO-A1-2011/152439
- JP-A- 2008 150 414
- US-A1- 2010 267 888
- US-A1- 2011 263 738

## Description

The present invention is directed to a polyvinyl alcohol fiber reinforced polypropylene composition with excellent impact/stiffness balance as well as to its preparation and use.

Polypropylene is a material used in a wide variety of technical fields, and reinforced polypropylenes have in particular gained relevance in fields previously exclusively relying on non-polymeric materials, in particular metals. For example in automotive parts, engineering plastics have been and still are extensively replaced by polypropylene and polypropylene-based composites, mainly driven by the need to provide lightweight-solutions and to reduce costs.
The addition of reinforcing fibres to polypropylene (PP) adds new design-parameters to polypropylene-based composites targeting the use of such materials in structural and semi-structural parts. Especially PP/glass-fibre (GF)-composites have found widespread use in such applications as they provide a unique combination of comparatively low cost and good stiffness and strength.
The conversion (compounding and injection-moulding) of PP/GF-composites is demanding as it needs to respect the rigid glass-fibre's sensitivity to shear-induced fibre breakage reducing the aspect-ratio and thus the reinforcing potential of the fibres - overall, structure-property-processing correlations in PP/GF-composites tend to be complex.
One additional drawback of PP/GF-composites is the significant difference in modulus of the fibre and modulus of the matrix being especially critical in the non-linear irreversible deformation regime where PP shows plastic deformation whereas the glass fibre is still fully elastic. This not only limits ultimate tensile elongation but also affects toughness and instrumented puncture-performance.
Moreover, rigid fibres tend to break easily during processing, resulting in overall complex structure-property-processing correlations.

There is additionally a need in the art to have fiber reinforced polypropylene (PP) grades combining an excellent impact/stiffness balance with an increased tenacity. A key parameter in this context is the strain at break (or elongation at break, ε_{B}) which normally is at a very low level, i.e. < 3.0% for PP/GF grades.

As alternative to glass fibers it is known to use organic fibers for reinforcing polypropylene. Such organic fibers can be made of polyamide, polyester, polyimide, cellulose, polyvinyl alcohol, etc..
It is further known that polyvinyl alcohol (PVA) fibers have higher strength, elastic modulus, resistances to weather and chemicals, and adhesiveness than e.g. polyamide and polyester fibers and have developed unique uses mostly in industrial field, e.g. under the commercial name "Vinylon". In recent years these fibers have caught much attention as reinforcement fiber for cement as a substitute for asbestos fibers.

From US 20100267888 it is further known to use such PVA fibers for incorporation into a polyolefin composition comprising a polyolefin and a modified polyolefin as coupling agent. It is stated that such PVA fiber containing polyolefin compositions have improved tensile strength and flexural strength.
US 20100267888 is absolutely silent about the strain at break and about impact performance.

Accordingly, although much development work has been done in the field of fiber reinforced polypropylene compositions, there still remains the need for further improved fiber reinforced grades.

Thus, the object of the present invention is to provide a fiber reinforced composition with excellent strain at break and at the same time excellent impact performance.

The finding of the present invention is that a fiber reinforced material with excellent strain at break and at the same time excellent impact performance can be obtained with fibers embedded in a polypropylene matrix and not necessarily needing a coupling agent.

Thus the present invention is directed to a fiber reinforced polypropylene composition comprising
(a) 98.0 to 50.0 wt% of a matrix (M) comprising a polypropylene (PP), wherein the polypropylene (PP) of the matrix (M) is a propylene homopolymer (H-PP1) having
   (i) a melt flow rate MFR2 (230°C) measured according to ISO 1133 of from 1 to 500 g/10min,
   (ii) a melting temperature Tm in the range of 150 to 175°C,
   (iii) a isotactic pentad concentration of higher than 90 mol% and
   (iv) a xylene cold soluble content (XCS) of not more than 5 wt%,
(b) 2.0 to 50.0 wt% of polyvinyl alcohol (PVA) fibers and
(c) 0.0 to 5.0 wt% of a polar modified polypropylene as coupling agent (CA),
based on the total weight of the fiber reinforced composition,
wherein the sum of (a), (b) and (c) is 100.0 wt% and wherein the composition
(i) has a tensile strain at break measured at 23°C according to ISO 527-2 (cross head speed 50 mm/min) of at least 8% and
(ii) a Charpy notched impact strength at 23 °C ISO 179-1eA:2000 of at least 10.0 kJ/m².

### Ad matrix (M)

The term "matrix" in the meaning of the present invention is to be interpreted in its commonly accepted meaning, i.e. it refers to a continuous phase (in the present invention a continuous polymer phase) in which isolated or discrete particles such as fibers are dispersed. The matrix (M) is present in such an amount so as to form a continuous phase which can act as a matrix.

The polypropylene (PP) of the matrix (M) is a propylene homopolymer (H-PP1) having a melt flow rate MFR₂ (230°C) measured according to ISO 1133 of from 1 to 500 g/10min, preferably of from 2 to 300 g/10min, still more preferably of from 5 to 100 g/10min and most preferably of from 8 to 80 g/10 min.

The polypropylene (PP), i.e. the propylene homopolymer (H-PP1) has a melting temperature Tm of equal to or below 175 °C, more preferably of below 170 °C, like of equal or below 168 °C. For example, the melting temperature ranges from 130 to 175 °C, more preferably ranges from 140 to 170 °C and most preferably ranges from 150 to 168 °C.

As mentioned above, in one embodiment of the present invention, the polypropylene (PP) is a propylene homopolymer (H-PP1).

The expression propylene homopolymer as used throughout the instant invention relates to a polypropylene that consists substantially, i.e. of more than 99.5 wt%, still more preferably of at least 99.7 wt%, like of at least 99.8 wt%, of propylene units. In a preferred embodiment only propylene units in the propylene homopolymer are detectable.

Preferably, the propylene homopolymer (H-PP1) has a melting temperature Tm in the range of 150 to 175 °C, more preferably in the range of 155 to 170 °C and most preferably in the range of 158 to 168 °C.

The propylene homopolymer (H-PP1) is preferably an isotactic propylene homopolymer. Accordingly, it is appreciated that the polypropylene matrix (H-PP1) has a rather high isotactic pentad concentration, i.e. higher than 90 mol%, more preferably higher than 92 mol%, still more preferably higher than 93 mol% and yet more preferably higher than 95 mol%, like higher than 97 mol%.

Furthermore, the propylene homopolymer (H-PP1) preferably has a xylene cold soluble content (XCS) of not more than 5 wt%, more preferably in the range of 0.1 to 3.5 wt%, still more preferably in the range of 0.5 to 3.0 wt%.

The propylene homopolymer (H-PP1) may be produced in the presence of a single-site catalyst, e.g. a metallocene catalyst, or in the presence of a Ziegler-Natta catalyst. The propylene homopolymer (H-PP1) is commercially available and known to the skilled person.

### Ad polyvinyl alcohol (PVA) fiber

PVA fibers are well known in the art and are preferably produced by a wet spinning process or a dry spinning process.

PVA itself is synthesized from acetylene [74-86-2] or ethylene [74-85-1] by reaction with acetic acid (and oxygen in the case of ethylene), in the presence of a catalyst such as zinc acetate, to form vinyl acetate [108-05-4] which is then polymerized in methanol. The polymer obtained is subjected to methanolysis with sodium hydroxide, whereby PVA precipitates from the methanol solution.

PVA used for the manufacture of fiber generally has a degree of polymerization of not less than 1000, preferably not less than 1200 and more preferably not less than 1500. Most preferably the PVA has a degree of polymerization of around 1700, e.g. 1500 up to 2000. The degree of hydrolysis of the vinyl acetate is generally at least 99 mol%.

The mechanical properties of PVA fibers vary depending on the conditions of fiber manufacture such as spinning process, drawing process, and acetalization conditions, and the manufacture conditions of raw material PVA.

The PVA fibers can be in the form of (multi)filaments or staple fibers.

PVA fibers are characterized by high strength, low elongation, and high modulus.

Suitable PVA fibers preferably have a tenacity of at least 0.4 N/tex up to 1.7 N/tex, more preferably of at least 0.6 N/tex up to 1.4 N/tex and most preferably of at least 0.7 N/tex up to 1.0 N/tex.

Furthermore such fibers preferably have a Young Modulus in the range of 3.0 up to 35.0 N/tex, preferably in the range of 10.0 to 30.0 N/tex and more preferably in the range of 15.0 to 25.0 N/tex (ISO 5079).

PVA fibers being suitable for the present invention have a fiber length of 2.0 to 20 mm, preferably of 2.5 to 15 mm, more preferably from 3.0 to 10 mm and most preferably from 3.5 to 6.0 mm.

The fiber average diameter of suitable PVA fibers is in the range of 10 to 20 µm, preferably in the range of 12 to 18 µm.

PVA fibers being suitable for the present invention are furthermore surface treated with a so called sizing agent. This can be done with known methods, like for example immersing the fibers in a tank in which a sizing agent is placed, being nipped and then drying in a hot-air oven, or with a hot roller or a hot plate.
Example of sizing agents include polyolefin resin, polyurethane resin, polyester resin, acrylic resin, epoxy resin, starch, vegetable oil, modified polyolefin.
The amount of the sizing agent related to the polyvinyl alcohol fibers is within the common knowledge of an art skilled person and can be, for example in the range of is 0.1 to 10 parts by weight of the sizing agent with respect to 100 parts by weight of the polyvinyl alcohol fibers.
A surface treating agent may be incorporated in the sizing agent to improve the wettability or adhesiveness between the polyvinyl alcohol fibers and the polypropylene composition.

Examples of the surface treating agent include silane coupling agents, titanate coupling agents, aluminum coupling agents, chromium coupling agents, zirconium coupling agents, borane coupling agents, and preferred are silane coupling agents or titanate coupling agents, and more preferably silane coupling agents.

### Ad polar modified polypropylene coupling agent (CA)

The fiber reinforced polypropylene composition optionally may comprise a coupling agent (CA).
Suitable coupling agents (CA) are polar modified propylene homopolymers and copolymers, like copolymers of propylene with ethylene and or with other α-olefins, as they are highly compatible with the polymers of the fiber reinforced composition.

Preference is given to modified polypropylenes containing groups deriving from polar compounds, in particular selected from the group consisting of acid anhydrides, carboxylic acids, carboxylic acid derivatives, primary and secondary amines, hydroxyl compounds, oxazoline and epoxides.
Specific examples of the said polar compounds are unsaturated cyclic anhydrides and their aliphatic diesters, and the diacid derivatives. In particular, one can use maleic anhydride and compounds selected from C₁ to C₁₀ linear and branched dialkyl maleates, C₁ to C₁₀ linear and branched dialkyl fumarates, itaconic anhydride, C₁ to C₁₀ linear and branched itaconic acid dialkyl esters, maleic acid, fumaric acid, itaconic acid and mixtures thereof.

Particular preference is given to using a propylene polymer grafted with maleic anhydride as the modified polymer, i.e. as the coupling agent (CA).

The modified polymer, i.e. the coupling agent (CA), can be produced in a simple manner by reactive extrusion of the polymer, for example with maleic anhydride in the presence of free radical generators (like organic peroxides), as disclosed for instance in EP 0 572 028.
The amounts of groups deriving from polar compounds in the modified polymer, i.e. the coupling agent (CA), are from 0.5 to 5.0 wt%, preferably from 0.5 to 4.0 wt%, and more preferably from 0.5 to 3.0 wt%.

Preferred values of the melt flow rate MFR2 (230°C) for the modified polymer, i.e. for the coupling agent (CA), are from 1.0 to 500 g/10 min.

### Ad fiber reinforced polypropylene composition

The fiber reinforced polypropylene composition of the present invention therefore comprises
(a) 98.0 to 50.0 wt% of a matrix (M) comprising a polypropylene (PP) as described above,
(b) 2.0 to 50.0 wt% of polyvinyl alcohol (PVA) fibers, as described above and
(c) 0.0 to 5.0 wt% of a polar modified polypropylene as coupling agent (CA),
based on the total weight of the fiber reinforced composition,
wherein the sum of (a), (b) and (c) is 100.0 wt%.

Preferably the fiber reinforced polypropylene composition comprises
(a) 95.0 to 55.0 wt% of a matrix (M) comprising a polypropylene (PP) as described above,
(b) 5.0 to 45.0 wt% of polyvinyl alcohol (PVA) fibers, as described above and
(c) 0.0 to 2.5 wt% of a polar modified polypropylene as coupling agent (CA),
based on the total weight of the fiber reinforced composition,
wherein the sum of (a), (b) and (c) is 100.0 wt%.

More preferably the fiber reinforced polypropylene composition comprises
(a) 92.0 to 60.0 wt% of a matrix (M) comprising a polypropylene (PP) as described above,
(b) 8.0 to 40.0 wt% of polyvinyl alcohol (PVA) fibers, as described above and
(c) 0.0 to 2.5 wt% of a polar modified polypropylene as coupling agent (CA),
based on the total weight of the fiber reinforced composition,
wherein the sum of (a), (b) and (c) is 100.0 wt%.

Most preferably the fiber reinforced polypropylene composition comprises
(a) 90.0 to 65.0 wt% of a matrix (M) comprising a polypropylene (PP) as described above,
(b) 10.0 to 35.0 wt% of polyvinyl alcohol (PVA) fibers, as described above and
(c) 0.0 to 2.5 wt% of a polar modified polypropylene as coupling agent (CA),
based on the total weight of the fiber reinforced composition,
wherein the sum of (a), (b) and (c) is 100.0 wt%.

In addition to the above described components, the instant composition may additionally contain typical other additives useful for instance in the automobile sector, like carbon black, other pigments, antioxidants, UV stabilizers, nucleating agents, antistatic agents and slip agents, in amounts usual in the art, providing that the overall sum of (a), (b), (c) and other additive is 100.0 wt%.

The additives as stated above are added to the polypropylene (PP), which is either collected from the final reactor of the polymer production process or in case of heterophasic propylene copolymer (HECO) also to the polymer obtained by melt-mixing.
Preferably, these additives are mixed into the polypropylene (PP) or during the extrusion process in a one-step compounding process. Alternatively, a master batch may be formulated, wherein the polypropylene (PP) is first mixed with only some of the additives.

For mixing the individual components of the instant fiber reinforced composition, a conventional compounding or blending apparatus, e.g. a Banbury mixer, a 2-roll rubber mill, Buss-co-kneader or a twin screw extruder may be used. Preferably, mixing is accomplished in a co-rotating twin screw extruder. The polymer materials recovered from the extruder are usually in the form of pellets. These pellets are then preferably further processed, e.g. by injection molding to generate articles and products of the inventive fiber reinforced composition.

The fiber reinforced polypropylene composition according to the invention has the following properties:
(i) a tensile strain at break measured at 23°C according to ISO 527-2 (cross head speed 50 mm/min) of at least 8%, preferably of at least 10% and more preferably of at least 12% and
(ii) a Charpy notched impact strength at 23 °C ISO 179-1eA:2000 of at least 10.0 kJ/m², preferably of at least 12 kJ/m² and more preferably of at least 15 kJ/m².

Additionally the fiber reinforced polypropylene composition according to the invention has a tensile strength measured at 23°C according to ISO 527-2 (cross head speed 50 mm/min) of at least 35 MPa, preferably of at least 40 MPa and more preferably of at least 50 MPa.

Thus, the fiber reinforced polypropylene composition show an improved strain at break and tensile strength balance and additionally excellent impact performance.

The polypropylene composition of the present invention is preferably used for the production of articles, especially automotive articles, like moulded automotive articles, preferably automotive injection moulded articles. Even more preferred is the use for the production of car interiors and exteriors, like bumpers, side trims, step assists, body panels, spoilers, dashboards, interior trims and the like.

The current invention also provides (automotive) articles, like injection molded articles, comprising at least to 60 wt%, more preferably at least 80 wt%, yet more preferably at least 95 wt%, like consisting, of the inventive polypropylene composition. Accordingly the present invention is especially directed to automotive articles, especially to car interiors and exteriors, like bumpers, side trims, step assists, body panels, spoilers, dashboards, interior trims and the like, comprising at least to 60 wt%, more preferably at least 80 wt%, yet more preferably at least 95 wt%, like consisting, of the inventive polypropylene composition.

In addition, the present invention also relates to a process for the preparation of the fiber reinforced composition as described above, comprising the steps of adding
(a)polypropylene (PP),
(b) the polyvinyl alcohol (PVA) fibers , and
(c) optionally the polar modified polypropylene as coupling agent (CA)
to an extruder and extruding the same obtaining said fiber reinforced composition.

### EXPERIMENTAL PART:

### A) METHODS

### Tensile tests:

The tensile strength and the tensile strain at break were measured at 23 °C according to ISO 527-2 (cross head speed 50 mm/min) using injection moulded specimens moulded at 230 °C according to ISO 527-2(1A), produced according to EN ISO 1873-2 (dog bone shape, 4 mm thickness).

**Charpy impact test:** The Charpy notched impact strength (NIS) was measured according to ISO 179-1eA:2000 at +23 °C, using injection-molded bar test specimens of 80x10x4 mm³ prepared in accordance with ISO 1873-2:2007.

### B) MATERIALS USED

### For matrix (M):

### PP-homopolymer (PP-H):

HJ325MO: a polypropylene homopolymer containing nucleating and antistatic additives, provided by Borealis. (CAS-No: 9003-07-0)

This polymer is a CR (controlled rheology) grade with narrow molecular weight distribution, density of 905 kg/m³ (ISO1183) and an MFR₂ of 50 g/10 min (230°C; 2.16 kg; ISO 1133); XS of 2.2 wt% and melting temperature of 164°C and a Charpy Notched Impact Strength at 23°C of 2.0 kJ/m²

### Heterophasic copolymer (PP-HECO):

BG055AI: nucleated high crystallinity PP impact copolymer having an MFR (230°C/2,16kg) of 22 g/10min, an elastomer content of 18 wt% as determined by the content of xylene solubles (XS) and a density of 920 kg/m³. The polymer contains 2 wt% of talc, based on the total weight of the polymer.

Tensile Strength [MPa] is 35 MPa, Charpy Notched Impact Strength at 23°C is 3.5 kJ/m²; Tensile Strain at Break is 32%.

### PVA fibers:

Chopped PVA-fibres Mewlon 2000T-750F HM1 (High Modulus), fibre-length 4mm, tenacitity of 1N/tex, Young Modulus of 21.5 N/tex with a specific surface-treatment for PP, supplied by Unitika

### Coupling agent (CA):

commercial maleic anhydride functionalized polypropylene "Scona TPPP 8112FA" of Kometra GmbH, Germany with a density of 0.9 g/cm³, having an MFR₂ (190°C; 2.16 kg) of 100 g/10min and an MAH content of 1.4 mol%.

### Comparative Example 1 (CE1)

**GB205U** is a commercially glass fibre reinforced composite of Borealis AG containing 20 wt% chemically coupled glass fibers embedded in a propylene homopolymer matrix, having an MFR₂(230 °C) of 2.2 g/10min and a melting temperature of 166 °C.

### EXAMPLES:

PP-compositions were produced using a parallel, co-rotating twin-screw extruder Brabender DSE20 (screw-diameter 20mm, length 40d) with four vertical ports at 0, 10, 20 and 30d which can be used for dosing and venting. All four downstream-zones were electrically heated and water-cooled. The extruder has two side-feeders at 11 and 22d. Polymer and additives were fed through vp1, vp2 and vp4 were used for atmospheric venting (vp3 remained closed).The fibres were fed through sp1 via the side-feeder.

The standard compounding-melt-temperature was 190°C.

A water-bath, cooled to about 15°C, and a strand pelletizer Primo 50 by Rieter were used to granulate the melt extruded through a die with a diameter of 3.0 mm. All components were fed via Motan-Colortronic gravimetric dosing scales. Single screw scales were employed for the polymer and the MA-PP. The fibres were fed via a GBS-C twin screw system.

From Table 1 the composition of the Inventive Examples 1 to 5 (IE1 to IE5) can be seen:

**Table 1:**

| | | **IE1** | **IE2** | **IE3** | **IE4** | **IE5** |
|---|---|---|---|---|---|---|
| **Matrix (M)** | **[wt%]** | | | | | |
| PP-H | | 78.0 | | 90.0 | 80.0 | 70.0 |
| PP-HECO | | | 78.0 | | | |

| **Fibers** | **[wt%]** | | | | | |
|---|---|---|---|---|---|---|
| PVA-fiber | | 20.0 | 20.0 | 10.0 | 20.0 | 30.0 |
| Tencel-fiber | | | | | | |

| **Coupling Agent (CA)** | **[wt%]** | | | | | |
|---|---|---|---|---|---|---|
| Scona TPPP | | 2.0 | 2.0 | 0.0 | 0.0 | 0.0 |

From Table 2 the properties of the Inventive Examples 1 to 5 (IE1 to IE5) and of Comparative Example 1 can be seen:

**Table 2:**

| | | **IE1** | **IE2** | **IE3** | **IE4** | **IE5** | **CE1** |
|---|---|---|---|---|---|---|---|
| Tensile Strength | [MPa] | 68 | 57 | 45 | 56 | 59 | 89 |
| Tensile Strain at Break | % | 13.3 | 12.4 | 14.2 | 13.2 | 12.7 | 3.4 |
| Charpy Notched (23°C) | kJ/m² | 29.8 | 16.9 | 12.7 | 30.4 | 48.9 | 10.5 |

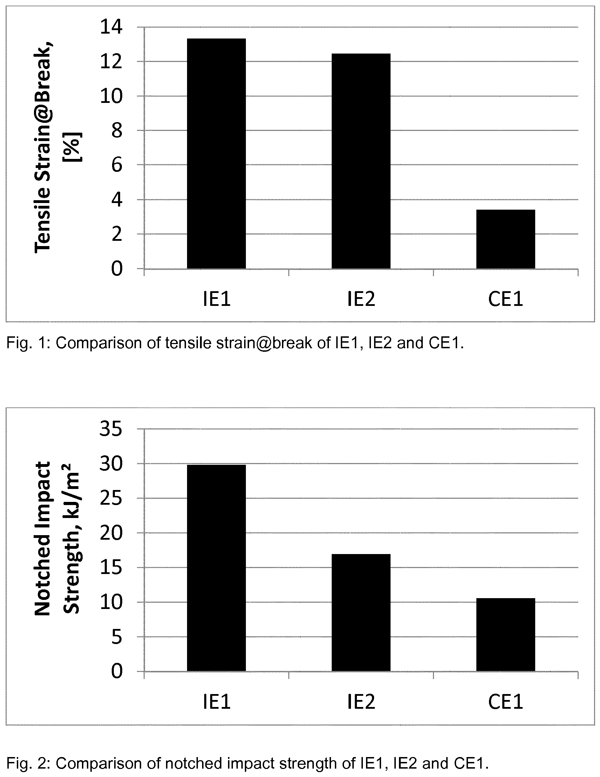

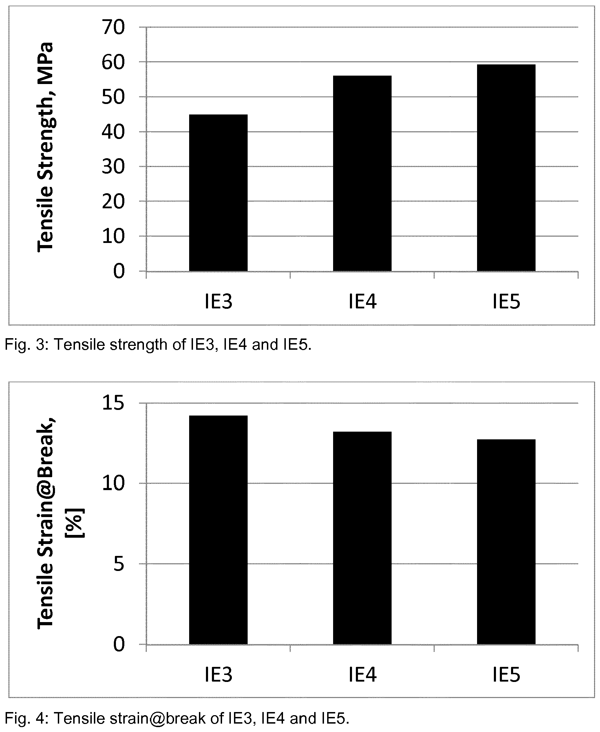

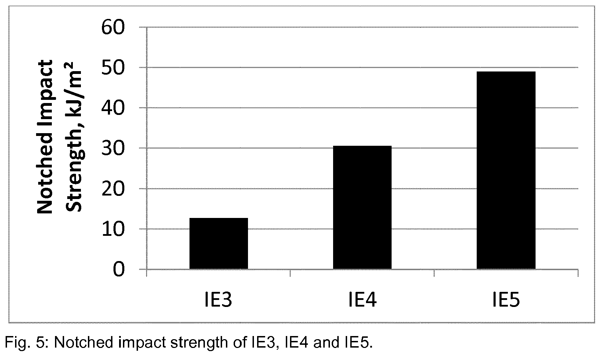

From this table and from Figures 1 to 5 it can be clearly seen that the compositions of the invention, i.e. the PVA-fiber reinforced PP compositions have an improved strain@break and tensile strength balance in combination with excellent impact performance, even if no coupling agent is used.

The advantages of the compositions of the invention, i.e. the PVA-fiber reinforced PP compositions over comparable compositions (using glass fibers) can be furthermore seen in the determined notched impact performance which is superior to conventional homo PP based GF composites.

## Claims

1. Fiber reinforced polypropylene composition comprising
(a) 98.0 to 50.0 wt% of a matrix (M) comprising a polypropylene (PP), wherein the polypropylene (PP) of the matrix (M) is a propylene homopolymer (H-PP1) having
(i) a melt flow rate MFR2 (230°C) measured according to ISO 1133 of from 1 to 500 g/10min,
(ii) a melting temperature Tm in the range of 150 to 175°C,
(iii) a isotactic pentad concentration of higher than 90 mol% and
(iv) a xylene cold soluble content (XCS) of not more than 5 wt%,
(b) 2.0 to 50.0 wt% of polyvinyl alcohol (PVA) fibers and
(c) 0.0 to 5.0 wt% of a polar modified polypropylene as coupling agent (CA),
based on the total weight of the fiber reinforced composition,
wherein the sum of (a), (b) and (c) is 100.0 wt% and wherein the composition
(i) has a tensile strain at break measured at 23°C according to ISO 527-2 (cross head speed 50 mm/min) of at least 8% and
(ii) a Charpy notched impact strength at 23 °C ISO 179-1eA:2000 of at least 10.0 kJ/m².

2. Fiber reinforced polypropylene composition according to claim 1 wherein the polyvinyl alcohol (PVA) fibers have
(i) a tenacity of at least 0.4 N/tex up to 1.7 N/tex,
(ii) a fiber length of 2.0 to 20 mm and
(ii) a fiber average diameter in the range of 10 to 20 µm.

3. Fiber reinforced polypropylene composition according to any of claims 1 or 2 wherein the polar modified polypropylene as coupling agent (CA) is selected from the group of modified polypropylenes containing groups deriving from polar compounds selected from the group consisting of acid anhydrides, carboxylic acids, carboxylic acid derivatives, primary and secondary amines, hydroxyl compounds, oxazoline and epoxides.

4. Fiber reinforced polypropylene composition according to claim 3, wherein the polar compounds are selected from maleic anhydride and compounds selected from C₁ to C₁₀ linear and branched dialkyl maleates, C₁ to C₁₀ linear and branched dialkyl fumarates, itaconic anhydride, C₁ to C₁₀ linear and branched itaconic acid dialkyl esters, maleic acid, fumaric acid, itaconic acid and mixtures thereof.

5. Fiber reinforced polypropylene composition according to any of the preceding claims 1 to 4, wherein the composition has
has a tensile strain at break measured at 23°C according to ISO 527-2 (cross head speed 50 mm/min) of at least 10% and
(ii) a Charpy notched impact strength at 23 °C ISO 179-1eA:2000 of at least 12.0 kJ/m².

6. Fiber reinforced polypropylene composition according to any of the preceding claims 1 to 5 wherein the composition has a tensile strength measured at 23°C according to ISO 527-2 (cross head speed 50 mm/min) of at least 35 MPa, preferably of at least 40 MPa and more preferably of at least 50 MPa.

7. Articles, comprising the polypropylene composition according to any of the preceding claims 1 to 6.

8. Articles according to claim 7, being automotive articles selected from car interiors and exteriors, like bumpers, side trims, step assists, body panels, spoilers, dashboards, interior trims and the like, comprising at least to 60 wt%, more preferably at least 80 wt%, yet more preferably at least 95 wt%, like consisting, of the polypropylene composition.

9. Process for the preparation of the fiber reinforced composition according to any of the preceding claims 1 to 6, comprising the steps of adding
(a) polypropylene (PP),
(b) the polyvinyl alcohol (PVA) fibers , and
(c) optionally the polar modified polypropylene as coupling agent (CA) to an extruder and extruding the same obtaining said fiber reinforced composition.

## Patentansprüche

1. Faserverstärkte Polypropylen-Zusammensetzung, umfassend
(a) 98,0 bis 50,0 Gew.-% einer Matrix (M), die ein Polypropylen (PP) umfasst, wobei das Polypropylen (PP) der Matrix (M) ein Propylenhomopolymer (H-PP1) ist, welches
(i) eine Schmelzflussrate MFR₂ (230°C), gemessen gemäß ISO 1133, von 1 bis 500 g/10min,
(ii) eine Schmelztemperatur Tₘ im Bereich von 150 bis 175°C,
(iii) eine isotaktische Pentad-Konzentration von mehr als 90 Mol-% und
(iv) einen xylolkaltlöslichen Gehalt (XCS) von nicht mehr als 5 Gew.-% aufweist,
(b) 2,0 bis 50,0 Gew.-% Polyvinylalkohol (PVA)-Fasern und
(c) 0,0 bis 5,0 Gew.-% eines polaren modifizierten Polypropylens als Kopplungsmittel (CA),
basierend auf dem Gesamtgewicht der faserverstärkten Zusammensetzung,
wobei die Summe von (a), (b) und (c) 100,0 Gew.-% beträgt und wobei die Zusammensetzung
(i) eine bei 23°C gemessene Bruchdehnung gemäß ISO 527-2 (Quergeschwindigkeit 50 mm/min) von mindestens 8% aufweist und
(ii) eine Charpy-Kerbschlagzähigkeit bei 23°C nach ISO 179-1eA:2000 von mindestens 10,0 kJ/m² aufweist.

2. Faserverstärkte Polypropylen-Zusammensetzung gemäß Anspruch 1, wobei die Polyvinylalkohol (PVA)-Fasern
(i) eine Zähigkeit von mindestens 0,4 N/tex bis zu 1,7 N/tex,
(ii) eine Faserlänge von 2,0 bis 20 mm und
(ii) einen durchschnittlichen Faserdurchmesser im Bereich von 10 bis 20 µm aufweisen.

3. Faserverstärkte Polypropylen-Zusammensetzung gemäß einem der Ansprüche 1 oder 2, wobei das polare modifizierte Polypropylen als Kupplungsmittel (CA) ausgewählt ist aus der Gruppe der modifizierten Polypropylene, die Reste enthalten, die sich von polaren Verbindungen ableiten, die ausgewählt sind aus der Gruppe, bestehend aus Säureanhydriden, Carbonsäuren, Carbonsäurederivaten, primären und sekundären Aminen, Hydroxylverbindungen, Oxazolin und Epoxiden.

4. Faserverstärkte Polypropylen-Zusammensetzung gemäß Anspruch 3, wobei die polaren Verbindungen ausgewählt sind aus Maleinsäureanhydrid und Verbindungen, ausgewählt aus linearen und verzweigten C₁-bis C₁₀-Dialkylmaleaten, linearen und verzweigten C₁- bis C₁₀-Dialkylfumaraten, Itaconsäureanhydrid, linearen und verzweigten C₁- bis C₁₀-Itaconsäuredialkylestern, Maleinsäure, Fumarsäure, Itaconsäure und Mischungen davon.

5. Faserverstärkte Polypropylen-Zusammensetzung gemäß einem der vorstehenden Ansprüche 1 bis 4, wobei die Zusammensetzung
eine bei 23°C gemessene Bruchdehnung gemäß ISO 527-2 (Quergeschwindigkeit 50 mm/min) von mindestens 10% aufweist und
(ii) eine Charpy-Kerbschlagzähigkeit bei 23°C nach ISO 179-1eA:2000 von mindestens 12,0 kJ/m² aufweist.

6. Faserverstärkte Polypropylen-Zusammensetzung gemäß einem der vorstehenden Ansprüche 1 bis 5, wobei die Zusammensetzung eine Zugfestigkeit, gemessen bei 23°C gemäß ISO 527-2 (Quergeschwindigkeit 50 mm/min), von mindestens 35 MPa, vorzugsweise von mindestens 40 MPa und stärker bevorzugt von mindestens 50 MPa, aufweist.

7. Gegenstände, welche die Polypropylen-Zusammensetzung nach einem der vorstehenden Ansprüche 1 bis 6 enthält.

8. Gegenstände gemäß Anspruch 7, bei denen es sich um Gegenstände für Kraftfahrzeuge handelt, die aus Fahrzeuginnen- und -außenräumen ausgewählt sind, wie Stoßfänger, Seitenverkleidungen, Trittstufenhilfen, Karosserieverkleidungen, Spoiler, Armaturenbretter, Innenverkleidungen und dergleichen, umfassend mindestens bis 60 Gew.-%, vorzugsweise mindestens 80 Gew.-%, stärker bevorzugt mindestens 95 Gew.-%, wie bestehend aus der Polypropylen-Zusammensetzung.

9. Verfahren zur Herstellung der faserverstärkten Zusammensetzung nach einem der vorstehenden Ansprüche 1 bis 6, umfassend die Schritte der Zugabe von
(a) Polypropylen (PP),
(b) die Polyvinylalkohol (PVA)-Fasern, und
(c) gegebenenfalls das polare modifizierte Polypropylen als Kopplungsmittel (CA)
zu einem Extruder und Extrudieren desselben unter Erhalt der faserverstärkten Zusammensetzung.

## Revendications

1. Composition de polypropylène renforcée par des fibres comprenant
(a) 98,0 à 50,0 % en poids d'une matrice (M) comprenant un polypropylène (PP), dans laquelle le polypropylène (PP) de la matrice (M) est un homopolymère de propylène (H-PP1) ayant
(i) un indice de fluage MFR2 (230°C), mesuré conformément à la norme ISO 1133, de 1 à 500 g/10 min,
(ii) un point de fusion Tm dans la plage de 150 à 175°C,
(iii) une concentration de pentade isotactique supérieure à 90 % en moles, et
(iv) une teneur soluble à froid dans le xylène (XCS) non supérieure à 5 % en poids,
(b) 2,0 à 50,0 % en poids de fibres de poly (alcool vinylique) (PVA) et
(c) 0,0 à 5,0 % en poids d'un polypropylène modifié polaire servant d'agent de couplage (CA),
basés sur le poids total de la composition renforcée par des fibres,
dans laquelle la somme de (a), (b) et (c) est de 100,0 % en poids et dans laquelle la composition
(i) a une déformation de traction à la rupture, mesurée à 23°C conformément à la norme ISO 527-2 (vitesse de tête d'équerre de 50 mm/min), d'au moins 8 %, et
(ii) une résistance au choc Charpy sur barreau entaillé à 23°C, conformément à la norme ISO 179-1eA:2000, d'au moins 10,0 kJ/m².

2. Composition de polypropylène renforcée par des fibres selon la revendication 1, dans laquelle les fibres de poly(alcool vinylique) (PVA) ont
(i) une ténacité d'au moins 0,4 N/tex à 1,7 N/tex,
(ii) une longueur de fibres de 2,0 à 20 mm et
(iii) un diamètre moyen de fibres dans la plage de 10 à 20 µm.

3. Composition de polypropylène renforcée par des fibres selon l'une quelconque des revendications 1 et 2, dans laquelle le polypropylène modifié polaire servant d'agent de couplage (CA) est choisi dans le groupe des polypropylènes modifiés contenant des groupes dérivant de composés polaires choisis dans le groupe constitué par les anhydrides d'acide, les acides carboxyliques, les dérivés d'acide carboxylique, les amines primaires et secondaires, les composés hydroxylés, l'oxazoline, et les époxydes.

4. Composition de polypropylène renforcée par des fibres selon la revendication 3, dans laquelle les composés polaires sont choisis parmi l'anhydride maléique et les composés choisis parmi les maléates de dialkyle linéaires et ramifiés en C₁ à C₁₀, les fumarates de dialkyle linéaires et ramifiés en C₁ à C₁₀, l'anhydride itaconique, les esters dialkyliques d'acide itaconique linéaires et ramifiés en C₁ à C₁₀, l'acide maléique, l'acide fumarique, l'acide itaconique et leurs mélanges.

5. Composition de polypropylène renforcée par des fibres selon l'une quelconque des revendications 1 à 4, dans laquelle la composition a
(i) une déformation de traction à la rupture, mesurée à 23°C conformément à la norme ISO 527-2 (vitesse de tête d'équerre de 50 mm/min), d'au moins 10 %, et
(ii) une résistance au choc Charpy sur barreau entaillé à 23°C, conformément à la norme ISO 179-1eA:2000, d'au moins 12,0 kJ/m².

6. Composition de polypropylène renforcée par des fibres selon l'une quelconque des revendications 1 à 5, dans laquelle la composition a une résistance à la traction, mesurée à 23°C conformément à la norme ISO 527-2 (vitesse de tête d'équerre 50 mm/min), d'au moins 35 MPa, de préférence d'au moins 40 MPa et plus préférablement d'au moins 50 MPa.

7. Articles comprenant la composition de polypropylène de l'une quelconque des revendications 1 à 6.

8. Articles selon la revendication 7, qui sont des articles pour automobile choisis parmi les intérieurs et extérieurs d'automobile, tels que les pare-chocs, les baguettes de protection, les marchepieds, les panneaux de carrosserie, les becquets, les tableaux de bord, les habillages intérieurs, et analogues, comprenant au moins 60 % en poids, plus préférablement au moins 80 % en poids, encore plus préférablement au moins 95 % en poids, tels que constitués, de la composition de polypropylène.

9. Procédé pour la préparation de la composition renforcée par des fibres de l'une quelconque des revendications précédentes 1 à 6, comprenant les étapes d'addition
(a) de polypropylène (PP),
(b) des fibres de poly(alcool vinylique) (PVA), et
(c) optionnellement du polypropylène modifié polaire servant d'agent de couplage (CA),
dans une extrudeuse, et d'extrusion de ceux-ci, ce qui donne ladite composition renforcée par des fibres.
